# EUROPEAN PATENT SPECIFICATION

(11) **EP 3 069 614 B1**
(45) Date of publication and mention of the grant of the patent: **15.08.2018**
(21) Application number: 14861602.2
(22) Date of filing: 13.11.2014
(51) Int. Cl.: A21D 2/16, A23D 7/00, A21D 13/04, A21D 2/36, C11C 3/08

(54) **DOUGH FOR BREAD/BAKED CONFECTIONERY, AND BREAD/BAKED CONFECTIONERY**
TEIG FÜR BROT/GEBACKENE SÜSSWARE SOWIE BROT/GEBACKENE SÜSSWARE
PÂTE POUR PAIN/PÂTISSERIE CUITE AU FOUR ET PAIN/PÂTISSERIE CUITE AU FOUR

(30) Priority: 15.11.2013 JP 2013237106
(43) Date of publication of application: 21.09.2016
(73) Proprietor: The Nisshin OilliO Group, Ltd., Tokyo 104-8285 (JP)
(72) Inventor: SAKURADA, Miho, Yokosuka-shi Kanagawa 239-0832 (JP); ITAGAKI, Hiroyuki, Yokosuka-shi Kanagawa 239-0832 (JP)
(74) Representative: Dennemeyer & Associates S.A.
(86) International application number: PCT/JP2014/080047
(87) International publication number: WO 2015/072501

(56) References cited:
- EP-A1- 2 090 172
- EP-A1- 2 090 172
- EP-A1- 3 078 271
- EP-A1- 3 085 237
- WO-A1-2012/101733
- WO-A1-2012/101733
- JP-A- 2002 262 757
- JP-A- 2009 034 089
- JP-A- 2009 107 954
- JP-A- 2009 107 954
- JP-A- 2009 148 225
- JP-A- 2009 148 253
- JP-A- 2009 148 253
- JP-A- 2013 048 577
- Toshiyuki Toyosaki ET AL: "Comparison of Expansion During Fermentation on Medium-Chain Triacylglycerols Oil-Based and Butter Fat-Based Doughs", Advance Journal of Food Science and Technology, 1 January 2010 (2010-01-01), pages 242-245, XP055348307, Retrieved from the Internet: URL:http://maxwellsci.com/print/ajfst/v2-2 42-245.pdf [retrieved on 2017-02-21]
- NORLELAWATI ARIFIN ET AL: "Relationship between textural properties and sensory qualities of cookies made from medium- and long-chain triacylglycerol-enriched margarines", JOURNAL OF THE SCIENCE OF FOOD AND AGRICULTURE, 1 January 2010 (2010-01-01), pages n/a-n/a, XP055348315, GB ISSN: 0022-5142, DOI: 10.1002/jsfa.3886
- NORLELAWATI ARIFIN ET AL: "Physicochemical Properties and Sensory Attributes of Medium- and Long-Chain Triacylglycerols (MLCT)-Enriched Bakery Shortening", FOOD AND BIOPROCESS TECHNOLOGY ; AN INTERNATIONAL JOURNAL, SPRINGER-VERLAG, NEW YORK, vol. 4, no. 4, 6 May 2009 (2009-05-06), pages 587-596, XP019893364, ISSN: 1935-5149, DOI: 10.1007/S11947-009-0204-0

## Description

### TECHNICAL FIELD

### <Cross Reference>

This application claims priority from Japanese Patent Application No. 2013-237106 filed with the Japan Patent Office on November 15, 2013.

The present invention relates to bread and baked confectionery including cereal flour containing a large amount of dietary fiber.

### BACKGROUND ART

People have been familiar with bread and baked confectionery as the staple food or luxury grocery items. General bread and baked confectionery, however, often have low fiber, low mineral, and high calories; in these points, it has been recognized that bread and baked confectionery are not suitable for people who want to prevent obesity or life-style related diseases including diabetic.

Various kinds of bread and baked confectionery with a nutrient added value enhanced by adding more proteins, dietary fiber, minerals, and the like which are deficient in the general bread and baked confectionery have been developed. In particular, the popular bread and baked confectionery include entirely or partially the cereal flour containing much dietary fiber, such as whole wheat flour and rye. Using the cereal flour containing much dietary fiber in the bread and baked confectionery, however, often results in the coarse appearance or dry texture of the bread and baked confectionery after baking.

For solving such a problem, for example, Patent Literature 1 has disclosed the dietary fiber reinforced bread obtained by using the material flour containing a particular amount of dietary fibrous material including indigestible dextrin and crystalline cellulose. The bread according to Patent Literature 1, however, uses the special material as the dietary fiber and is therefore poor in versatility. Patent Literature 2 has disclosed the food material mainly containing one of roasted wheat bran and roasted rice bran, gluten, and a small amount of psyllium testa (psyllium) powder and essentially free from carbohydrate (starch). Specifically, Patent Literature 2 has disclosed the food material specialized for containing no carbohydrate (starch) and is therefore poor in versatility. Further, Advance Journal of Food Science and Technology (1 January 2010, pages 242-245) discloses Medium-Chain Triacylglycerols (MCT) oilbased doughs, and Journal of the Science of Food and Agriculture (1, January 2010, pages 9430948) discloses the study of textural properties and sensory qualities of cookies made from medium- and long-chain tryacylglycelol-enriched margarines.

### CITATION LIST

### PATENT LITERATURE

PATENT LITERATURE 1: JP-A-2001-45960
PATENT LITERATURE 2: JP-A-2005-245321

### SUMMARY OF THE INVENTION

### PROBLEMS TO BE SOLVED BY THE INVENTION

An object of the present invention is to provide dough which can provide bread and baked confectionery with the good appearance and the suppressed dry texture even though the dough includes the cereal flour containing a large amount of dietary fiber. Another object of the present invention is to provide bread and baked confectionery obtained by baking the dough.

### SOLUTION TO THE PROBLEMS

The present inventors have made concerted studies for solving the above problem. As a result, the present inventors have had a particular amount of medium-chain fatty acid containing triacylglycerol (MTG) contained in dough for bread and baked confectionery, which is made of cereal flour containing a large amount of dietary fiber, and found out that this enables to provide the bread and baked confectionery, which are formed by baking the dough, with the good appearance and the suppressed dry texture. The present invention has thusly been completed.

That is to say, the present invention provides bakery dough, and a method of manufacturing the same as described below.
(1) Bakery dough including: 10 to 60 mass% of cereal flour containing 4 mass% or more of dietary fiber; and 1 to 35 mass% of medium-chain fatty acid containing triacylglycerol (MTG), and n-decanoic acid in the medium-chain fatty acid in the MTG is 60 to 100 mass%.
(2) The bakery dough according to (1) configured such that the cereal flour is one or more kinds of cereal flour selected from whole wheat flour, wheat germ, rye, soybean flour, corn flour, wheat bran, rice bran, and flour obtained by processing any of these.
(3) Bakery products obtained by heating and baking the bakery dough according to any one of (1) to (2).
(4) A method of manufacturing bakery products, including: preparing bakery dough including 10 to 60 mass% of cereal flour containing 4 mass% or more of dietary fiber and including 1 to 35 mass% of medium-chain fatty acid containing triacylglycerol (MTG), and n-decanoic acid in the medium-chain fatty acid in the MTG is 60 to 100 mass%, by using an oil and fat composition containing medium-chain fatty acid containing triacylglycerol (MTG); and heating and baking the dough.

### EFFECTS OF THE INVENTION

The present invention is to provide dough which can provide bread and baked confectionery with the good appearance and the suppressed dry texture even though the dough includes the cereal flour containing a large amount of dietary fiber. Another object of the present invention is to provide bread and baked confectionery obtained by baking the dough.

### EMBODIMENTS OF THE INVENTION

The present invention will hereinafter be described in detail. Bakery dough according to the present invention (dough for bread or baked confectionery before being heated and baked) contains 10 to 60 mass% of cereal flour containing 4 mass% or more of dietary fiber. The cereal flour containing 4 mass% or more of dietary fiber, which is used for the bakery dough of the present invention, is not particularly limited and may be any cereal flour ground in the powder form to be suitable for being eaten. The cereal flour is preferably one or more kinds of cereal flour selected from whole wheat flour, wheat germ, rye flour, soybean flour, corn flour, wheat bran, rice bran, and flour obtained by processing any of these. In particular, the cereal flour containing much dietary fiber, such as soybean flour, whole wheat flour, wheat bran, and flour obtained by processing any of these, is preferable because these provide the effect of the present invention remarkably. By using any of the above cereal flour as the cereal flour containing 4 mass% or more of dietary fiber, the healthy bakery products can be provided.

The bakery dough according to the present invention includes preferably 15 to 55 mass%, more preferably 20 to 50 mass%, of the cereal flour containing 4 mass% or more of dietary fiber. The cereal flour contains the dietary fiber by preferably 4 to 52 mass%, more preferably 6 to 47 mass%, much more preferably 6 to 25 mass%, and the most preferably 8 to 20 mass%. The amount of dietary fiber contained in the cereal flour in the present invention corresponds to the total amount of insoluble dietary fiber and water-soluble dietary fiber, and the amount thereof can be measured based on, for example, Prosky's method (guideline of food sanitation supervised by Ministry of Health, Labour, and Welfare, 2005).

The bakery dough according to the present invention contains 1 to 35 mass% of triacylglycerol including a medium-chain fatty acid as a constituent fatty acid (medium-chain fatty acid containing triacylglycerol). The medium-chain fatty acid in the present invention is the fatty acid with 6 to 10 carbons. The medium-chain fatty acid is the saturated straight-chain fatty acid. Wherein n-decanoic acid in the medium-cahin fatty acid in the MTG is 60 to 100 mass%.

Of the medium-chain fatty acid containing triacylglycerol used for the bakery dough according to the present invention (hereinafter also referred to as MTG), a part of or the entire constituent fatty acid of the medium-chain fatty acid is triacylglycerol. Triacylglycerol whose constituent fatty acid is entirely the medium-chain fatty acid is medium-chain fatty acid triacylglycerol (hereinafter also referred to as MCT). MCT is included in MTG.

The medium-chain fatty acid containing triacylglycerol (MTG) used for the bakery dough according to the present invention includes n-decanoic acid in the medium-chain fatty acid in the entire MTG by 60 to 100 mass%. The medium-chain fatty acid included in the entire MTG contains n-hexanoic acid by preferably 30 mass% or less, more preferably 20 mass% or less, and much more preferably 0 to 10 mass%. When the medium-chain fatty acid included in the entire MTG contains n-decanoic acid and n-hexanoic acid by the amount within the above range, the bakery products formed by heating and baking the bakery dough has the good flavor. In addition, such bakery products burden the stomach less, which is preferable.

The fatty acid in the medium-chain fatty acid containing triacylglycerol (MTG) in the present invention, which is other than the medium-chain fatty acid, is preferably the long-chain fatty acid. The long-chain fatty acid is the saturated and unsaturated fatty acid with 12 or more carbons, preferably 12 to 22 carbons. Examples of the long-chain fatty acid include lauric acid, myristic acid, palmitic acid, stearic acid, behenic acid, oleic acid, linoleic acid, and linolenic acid. The long-chain fatty acid preferably has 16 to 22 carbons.

When the medium-chain fatty acid containing triacylglycerol (MTG) in the present invention includes the long-chain fatty acid (hereinafter this triacylglycerol is also referred to as MLCT) and the medium-chain fatty acid is represented by M and the long-chain fatty acid is represented by L, this triacylglycerol can have structures represented by MLL, LML, LLM, MML, MLM, and LMM. The medium-chain fatty acid triacylglycerol (MCT) has the structure represented by MMM. How to analyze and calculate the medium-chain fatty acid containing triacylglycerol (MTG) are based on the methods known in the art and specifically, the summary (Journal of America Oil Chemists' Society 40, 242-247 (1963)) by R. J. VANDERWAL can be referred to.

The medium-chain fatty acid containing triacylglycerol (MTG) in the present invention is obtained by interesterification and/or esterification usually performed in the process for oils and fats. For example, in the case of the medium-chain fatty acid triacylglycerol (MCT), the medium-chain fatty acid and glycerol are subjected to dehydrating and condensing through heat treatment at 120 to 180°C with the catalyst, preferably without the catalyst, in accordance with the normal method, and this reaction occurs preferably under reduced pressure. If necessary, the reaction may be followed by catalyst removing and decoloring and deodorizing, which are usually performed in a refining process for the edible oils and fats.

The medium-chain fatty acid containing triacylglycerol (MTG) including the long-chain fatty acid in the present invention is obtained by the interesterification of mixed oils and fats. The mixed oils and fats are obtained by, for example, mixing MCT and the oils and fats whose 90 mass% or more of the constituent fatty acid is the fatty acid with 16 or more carbons, such as rape-seed oil or palm oil, at a mass ratio of preferably 10 : 90 to 90 : 10, more preferably 20 : 80 to 80 : 20. A method of the interesterification is not limited in particular, and either chemical interesterification or enzymatic interesterification may be employed. The chemical interesterification uses a chemical catalyst such as sodium methylate as a catalyst, and the reaction is non-selective interesterification with low position selectivity. Some natural oils and fats include oils and fats containing MTG such as coconut oil and palm kernel oil. The oils and fats obtained through one kind or two or more kinds of processes selected from mixing, hydrogenating, fractionating, and interesterification can also be used as the entire or a part of the MTG in the present invention.

The chemical interesterification can be performed by a normal method in a manner that, for example, a catalyst is added by 0.1 to 1 mass% to raw material oils and fats that are sufficiently dried. Then, the raw material oils and fats including the catalyst are stirred under reduced pressure at 80 to 120°C for 0.5 to 1 hour to cause the reaction. After the interesterification reaction, the catalyst is washed away with water and then decoloring and deodorizing, which are usually performed in a refining process for the edible oils and fats, can be performed.

The enzymatic interesterification is performed using a lipase preparation as the catalyst, and by selecting the lipase preparation, the interesterification with 1,3-position selectivity can be performed. The enzymatic interesterification can be performed by a normal method in a manner that, for example, the lipase preparation is added to raw material oils and fats by 0.01 to 5 mass% relative to the oils and fats. After that, the raw material oils and fats including the catalyst are stirred at 30 to 70°C for 1 to 40 hours to cause the reaction. After the interesterification reaction, the lipase preparation is removed by filtration and then decoloring and deodorizing, which are usually performed in a refining process for the edible oils and fats, can be performed.

The bakery dough according to the present invention contains the medium-chain fatty acid containing triacylglycerol (MTG) by preferably 2 to 26 mass%, more preferably 2 to 20 mass%. MTG in the bakery dough according to the present invention contains MCT by preferably 30 mass% or more, more preferably 50 mass% or more, and much more preferably 60 mass% or more. The bakery dough according to the present invention contains MCT by preferably 1 to 20 mass%, more preferably 1 to 16 mass% or more, and much more preferably 2 to 12 mass%. The bakery dough according to the present invention preferably contains the medium-chain fatty acid containing triacylglycerol (MTG) in the amount within the above range. This provides the dough that can produce the bread and baked confectionery having the good appearance and the suppressed dry texture after baking even though the dough is made of cereal flour containing much dietary fiber and.

In the case of using the medium-chain fatty acid containing triacylglycerol (MTG) for the bakery dough according to the present invention, it is convenient that the oil and fat composition including MTG is prepared in advance and this oil and fat composition is used for manufacturing the bakery dough. This oil and fat composition may be like margarine containing water or shortening without water. The oil and fat composition contains MTG by preferably 5 to 99 mass%, more preferably 20 to 90 mass%, and much more preferably 30 to 80 mass%.

The oil and fat composition may include edible oils and fats without MTG as necessary, unless the features according to the present invention are lost. For example, the edible oils and fats may be palm oil, cacao fat, sal fat, shea fat, soybean oil, rape-seed oil, corn oil, cotton-seed oil, safflower oil, sunflower oil, rice oil, sesame oil, olive oil, grape-seed oil, nut oil, linseed oil, lard, beef tallow, fish oil, or oils and fats obtained by performing one kind or two or more kinds of processes including mixing, fractionating, hydrogenating, and interesterification on any of those oils and fats.

Unless the features of the present invention are lost, the oil and fat composition may contain an additive used for general margarine and shortening as necessary. Specifically, emulsifier such as polyglycerol fatty acid ester, sucrose fatty acid ester, sorbitan fatty acid ester, and glycerol fatty acid ester, antioxidant such as vitamin E, ascorbic acid fatty acid ester, lignan, coenzyme Q, orizanol, and tocopherol, coloring materials, and flavoring agents are given, and these are added to improve the preservation stability, the oxidation stability, and the thermal stability, and suppress the crystallization at low temperature. The amount of additives contained in the oil and fat composition is preferably 3 mass% or less.

The oil and fat composition can be manufactured in accordance with the normal method employed in the manufacture of margarine and shortening in a manner that: the melted oil and fat composition including the medium-chain fatty acid containing triacylglycerol (MTG) is plasticized by rapid cooling with a combinator, votator, or the like.

The bakery dough according to the present invention may be formed of the material normally used for the bakery dough except that the material contains 10 to 60 mass% of cereal flour containing 4 mass% or more of dietary fiber and 1 to 35 mass% of medium-chain fatty acid containing triacylglycerol (MTG). Examples of the materials to be mixed in addition to the cereal flour containing 4 mass% or more of dietary fiber include cereal flour such as wheat flour (strong flour, medium-strength flour, and weak flour), wheat gluten, and rice flour, powder such as vital gluten, starch, and cellulose powder, yeast, yeast food, salt, saccharides such as sugar (granular sugar and superior soft sugar), sugar alcohols, egg (whole egg and egg mixture), various egg products, dairy products (skim milk and milk), oils and fats to be kneaded in (butter and the like), and aqueous components such as water and soybean milk.

If the bakery dough according to the present invention includes other cereal flour in addition to the cereal flour containing 4 mass% or more of dietary fiber, the other cereal flour is contained by preferably 30 mass% or less, more preferably 20 mass% or less, and much more preferably 0 to 10 mass%. When the cereal flour other than the cereal flour containing 4 mass% or more of dietary fiber is contained in the above range, the bakery products formed by baking the bakery dough is the preferable bakery products without the dry texture and having the flavor and texture unique to the cereal flour containing 4 mass% or more of dietary fiber.

The bakery dough according to the present invention is manufactured by a method normally employed for preparing the bakery dough except that 10 to 60 mass% of cereal flour containing 4 mass% or more of dietary fiber and 1 to 35 mass% of medium-chain fatty acid containing triacylglycerol (MTG) are included. Examples of the manufacturing method include, in the case of the dough for bread, the direct dough method (straight dough method), the sponge and dough method, the all-in-mix method, the old dough method, the sugared sponge and dough method, the pre-ferment and dough method, and the no-time dough method. In the case of the dough for baked confectionery (dough for cake and cookies), the sugar batter method, the whole-egg whipping method, the white and yolk separate whipping method, and the all-in-mix method are given. The oil and fat composition including the medium-chain fatty acid containing triacylglycerol (MTG) can be added to the dough by a method normally employed to add the shortening, margarine, or fat spread in the manufacturing method. The prepared dough may be frozen and preserved as the frozen dough.

The bakery products according to the present invention are obtained by heating and baking the bakery dough according to the present invention. The term heating and baking herein used refers to all forms of cooking with heat, including heating and baking with an oven or broiling, cooking with a microwave, boiling, steaming, and frying. Examples of the food product made of the bakery dough according to the present invention include bread (white bread, rolls, sweet bread, stuffed bread, baguettes, rye bread, etc.), yeast confectionery (stollen, panettone, gugelhupf, brioche, donut, etc.), pastries (Danish pastries, croissants, pies, etc.), cake (butter cake, sponge cake, donut, bouchee, muffin, hot cake, pancakes, waffles, etc.), biscuit, cookies, Japanese-style confectionery (bun filled with bean jam, milk confectionery, steamed bread, Japanese sponge cake filled with bean jam, pancake filled with bean jam, etc.), noodles (udon noodle, soba noodle, Chinese noodle, pasta, etc.), and dumplings (gyoza, shao-mai, Chinese bun, wonton, spring roll, etc.).

### Examples

The present invention will hereinafter be described in more detail with reference to Examples and Comparative Examples.

### <Analysis method>

The content amount of triacylglycerol was measured based on AOCS Ce5-86. The amount of each fatty acid was measured based on AOCS Celf-96.

### <Oils and fats>

[MCT1]: Medium-chain fatty acid triacylglycerol including n-octanoic acid (carbon number: 8) and n-decanoic acid (carbon number: 10) as the constituent fatty acid at a mass ratio of 30 : 70 (manufactured by Nisshin OilliO Group, Ltd.) was used as MCT1.

[Vegetable oil and fat 1]: Coconut hydrogenated oil (manufactured by Nisshin OilliO Group, Ltd., containing 12.3 mass% of medium-chain fatty acid in the constituent fatty acid included in triacylglycerol (specifically, 8.0 mass% of n-octanoic acid and 4.3 mass% of n-decanoic acid), 53.2 mass% of MTG, and 0 mass% of MCT) was used as vegetable oil and fat 1.

[Vegetable oil and fat 2]: Fully hydrogenated high-erucic acid rape-seed oil (YOKOZEKI OIL & FAT INDUSTRIES CO., LTD., containing 0 mass% of MTG) was used as vegetable oil and fat 2.

[Vegetable oil and fat 3]: Rape-seed oil (manufactured by Nisshin OilliO Group, Ltd., containing 0 mass% of MTG) was used as vegetable oil and fat 3.

[Vegetable oil and fat 4]: Palm mid fraction (manufactured by Nisshin OilliO Group, Ltd., containing 0 mass% of MTG) was used as vegetable oil and fat 4.

[Interesterified oil 1]: Interesterified oil obtained by chemically interesterifying mixed oil containing 50 parts by mass of fully hydrogenated palm stearin oil and 50 parts by mass of fully hydrogenated palm kernel olein oil (the fatty acid in triacylglycerol includes 3.2 mass% of medium-chain fatty acid (specifically, 2.0 mass% of n-octanoic acid, 1.2 mass% of n-decanoic acid), 13.2 mass% of MTG, and 0 mass% of MCT) was used as interesterified oil 1.

### [Interesterified oil 2]

Interesterified oil obtained by chemically interesterifying palm olein (containing 0 mass% of MTG) was used as interesterified oil 2.

### <Preparation oil and fat composition (margarine)>

An oil phase and a water phase were prepared in accordance with Table 1, and the resulting mixture was plasticized through rapid cooling with a combinator by a normal method, whereby an oil and fat composition 1 and an oil and fat composition 2 were prepared. Table 1 shows the amount of MTG in each oil and fat composition, the amount of MCT in MTG, and the amount of n-decanoic acid contained in the medium-chain fatty acid included in oils and fats.

**[Table 1]**

| Table 1: Components of oil and fat composition and amount of MTG, unit: mass% | | | |
|---|---|---|---|
| | | Oil and fat composition 1 | Oil and fat composition 2 |
| Oils and fats | MCT 1 | 41.7 | - |
| | Vegetable oil and fat 1 | 32.9 | - |
| | Vegetable oil and fat 2 | 0.5 | 0.5 |
| | Vegetable oil and fat 3 | - | 41.7 |
| | Vegetable oil and fat 4 | - | 20.4 |
| | Interesterified oil 1 | 8.3 | 8.3 |
| | Interesterified oil 2 | - | 12.5 |
| | Emulsifier | 0.4 | 0.4 |
| Water phase | Water | 16.0 | 16.0 |
| | Salt | 0.2 | 0.2 |
| Total | | 100 | 100 |
| Amount of MTG contained | | 60.3 | 1.1 |
| Amount of MCT contained in MTG | | 69.2 | 0 |
| Amount of n-decanoic acid contained in medium-chain fatty acid | | 66.7 | 37.5 |

### <Manufacture of bread containing soybean flour>

Dough for bread according to Example 1 and Comparative Example 1, which includes the oil and fat composition 1 and the oil and fat composition 2 as the oil and fat composition and soybean flour (containing 17.1 mass% of dietary fiber), was prepared by the no-time dough method in accordance with Table 2. The prepared dough was baked in an oven; thus, bread containing soybean flour according to Example 1 and Comparative Example 1 was obtained. Table 3 shows the amount of MTG (mass%) in the dough for bread containing soybean flour according to Example 1 and Comparative Example 1.

### <Evaluation on bread containing soybean flour>

In regard to the bread containing soybean flour according to Example 1 and Comparative Example 1, the taste of the bread one day after the baking was evaluated and the hardness of the bread one day and three days after the baking was measured with a rheometer under the condition below. As the rheometer measurement value (maximum pressure) is smaller, the bread is softer. Table 3 shows the results.

### [Rheometer measurement condition]

Used equipment: creep meter (product name, manufactured by Yamaden Co., Ltd.)
Plunger: 30 mm in diameter, 8 mm in height
Sample: bread with a thickness adjusted to 20 mm
Measured value: maximum pressure (g/f) when a sample is pressed from the top by 10 mm

**[Table 2]**

| Table 2: Components of bread containing soybean flour, unit: mass% | |
|---|---|
| Soybean flour | 26.0 |
| Vital gluten | 14.3 |
| Sugar | 6.9 |
| Flavor material | 3.3 |
| Raw yeast | 1.5 |
| Polysaccharide thicker | 1.3 |
| Salt | 0.4 |
| Oil and fat composition | 5.2 |
| Water | 41.1 |
| Total | 100 |

**[Table 3]**

| Table 3: Amount of MTG in dough for bread containing soybean flour and evaluation on bread containing soybean flour | | |
|---|---|---|
| | Example 1 | Comparative Example 1 |
| Amount of MTG (mass%) | 3.1 | 0.1 |
| Taste | Soft and tasty | Hard and dry |
| Value of rheometer (g/f) | After one day 880 | After one day 1000 |
| | After three days 960 | After three days 1030 |

### <Manufacture 1 of cookie containing soybean flour>

Dough for cookie according to Example 2 and Comparative Example 2, which includes the oil and fat composition 1 and the oil and fat composition 2 as the oil and fat composition and soybean flour (containing 16.8 mass% of dietary fiber), was prepared by the sugar batter method in accordance with Table 4. The prepared dough was formed in a stick-like shape and baked in an oven; thus, cookie containing soybean flour according to Example 2 and Comparative Example 2 was obtained. Table 5 shows the amount of MTG (mass%) in the dough for cookie containing soybean flour according to Example 2 and Comparative Example 2.

### <Evaluation 1 on cookie containing soybean flour>

In regard to the cookie containing soybean flour according to Example 2 and Comparative Example 2, the external appearance and the taste thereof one day after the baking were evaluated, and the results are shown in Table 5.

**[Table 4]**

| Table 4: Components 1 of cookie containing soybean flour, unit: mass% | |
|---|---|
| Soybean flour | 42.4 |
| Sugar | 23.3 |
| Whole egg | 10.6 |
| Salt | 0.4 |
| Oil and fat component | 23.3 |
| Total | 100 |

**[Table 5]**

| Table 5: Amount of MTG in dough for cookie containing soybean flour, and evaluation on cookie containing soybean flour | | |
|---|---|---|
| | Example 2 | Comparative Example 2 |
| Amount of MTG contained (mass%) | 14.0 | 0.3 |
| External appearance | Smooth and good | A plurality of cracks is observed |
| Taste | Soft and tasty | Hard and dry |

### <Manufacture 2 of cookie containing soybean flour>

Dough for cookie according to Example 3 and Comparative Example 3, which includes the oil and fat composition 1 and the oil and fat composition 2 as the oil and fat composition and soybean flour (containing 16.8 mass% of dietary fiber), was prepared by the sugar batter method in accordance with Table 6. The prepared dough was formed in a stick-like shape and baked in an oven; thus, cookie containing soybean flour according to Example 3 and Comparative Example 3 was obtained. Table 7 shows the amount of MTG (mass%) in the dough for cookie containing soybean flour according to Example 3 and Comparative Example 3.

### <Evaluation 2 on cookie containing soybean flour>

In regard to the cookie containing soybean flour according to Example 3 and Comparative Example 3, the external appearance and the taste thereof one day after the baking were evaluated, and the results are shown in Table 7.

**[Table 6]**

| Table 6: Components 2 of cookie containing soybean flour, unit: mass% | |
|---|---|
| Soybean flour | 27.1 |
| Banana paste | 20.4 |
| Sugar | 12.2 |
| Chocolate chip | 9.5 |
| Dried fruit | 6.8 |
| Coconut butter | 4.7 |
| Whole egg | 4.1 |
| Salt | 0.3 |
| Oil and fat composition | 14.9 |
| Total | 100 |

**[Table 7]**

| Table 7: Amount of MTG in dough for cookie containing soybean flour, and evaluation on cookie containing soybean flour | | |
|---|---|---|
| | Example 3 | Comparative Example 3 |
| Amount of MTG (mass%) | 9.0 | 0.2 |
| External appearance | Good | Some cracks are observed |
| Taste | Soft and tasty | Hard and dry |

### <Manufacture of bread containing whole wheat flour>

Dough for bread according to Example 4 and Comparative Example 4, which includes the oil and fat composition 1 and the oil and fat composition 2 as the oil and fat composition and whole wheat flour (containing 8.9 mass% of dietary fiber), was prepared by the straight dough method in accordance with Table 8. The prepared dough was baked in an oven; thus, bread containing whole wheat flour according to Example 4 and Comparative Example 4 was obtained. Table 9 shows the amount of MTG (mass%) in the dough for bread containing whole wheat flour according to Example 4 and Comparative Example 4.

### <Evaluation on bread containing whole wheat flour >

In regard to the bread containing whole wheat flour according to Example 4 and Comparative Example 4, the taste of the bread one day after the baking was evaluated and the hardness of the bread one day and three days after the baking was measured with a rheometer under the condition below. As the rheometer measurement value (maximum pressure) is smaller, the bread is softer. Table 9 shows the results.

### [Rheometer measurement condition]

Used equipment: creep meter (product name, manufactured by Yamaden Co., Ltd.)
Plunger: 30 mm in diameter, 8 mm in height
Sample: bread with a thickness adjusted to 20 mm
Measured value: maximum pressure (g/f) when a sample is pressed from the top by 10 mm

**[Table 8]**

| Table 8: Components of bread containing whole wheat flour, unit: mass% | |
|---|---|
| Whole wheat flour | 47.7 |
| Raw yeast | 1.3 |
| Bread dough improver | 0.6 |
| Sugar, honey | 5.3 |
| Salt | 1.0 |
| Skim milk | 1.0 |
| Oil and fat composition | 2.4 |
| Water | 40.7 |
| Total | 100 |

**[Table 9]**

| Table 9: Amount of MTG in bread containing whole wheat flour, and evaluation on bread containing whole wheat flour | | |
|---|---|---|
| | Example 4 | Comparative Example 4 |
| Amount of MTG (mass%) | 1.4 | 0.0 |
| Taste | Soft, moist, and tasty | Hard and dry |
| Value of rheometer (g/f) | After one day 920 | After one day 949 |
| | After three days 971 | After three days 1172 |

### <Manufacture of cookie containing whole wheat flour>

Dough for cookie according to Example 5 and Comparative Example 5, which includes the oil and fat composition 1 and the oil and fat composition 2 as the oil and fat composition and whole wheat flour (containing 8.9 mass% of dietary fiber), was prepared by the sugar batter method in accordance with Table 10. The prepared dough was formed in a stick-like shape and baked in an oven; thus, cookie containing whole wheat flour according to Example 5 and Comparative Example 5 was obtained. Table 11 shows the amount of MTG (mass%) in the dough for cookie containing whole wheat flour according to Example 5 and Comparative Example 5.

### <Evaluation on cookie containing whole wheat flour>

In regard to the cookie containing whole wheat flour according to Example 5 and Comparative Example 5, the external appearance and the taste one day after the baking were evaluated, and the results are shown in Table 11.

**[Table 10]**

| Table 10: Components of cookie containing whole wheat flour, unit: mass% | |
|---|---|
| Whole wheat flour | 47.4 |
| Sugar | 23.7 |
| Whole egg | 4.7 |
| Salt | 0.5 |
| Oil and fat composition | 23.7 |
| | 100 |

**[Table 11]**

| Table 11: Amount of MTG in dough for cookie containing whole wheat flour and evaluation on cookie containing whole wheat flour | | |
|---|---|---|
| | Example 5 | Comparative Example 5 |
| Amount of MTG (mass%) | 14.3 | 0.3 |
| External appearance | Only a few cracks are observed. | A plurality of cracks is observed. Dough became loosened in the baking and failed to retain its shape. |
| | Dough did not become loose in the baking and retained its shape. | |
| Taste | Soft and tasty | Hard and dry |

### <Manufacture of cookie containing wheat bran>

Dough for cookie according to Example 6 and Comparative Example 6, which includes the oil and fat composition 1 and the oil and fat composition 2 as the oil and fat composition and wheat bran (containing 45.1 mass% of dietary fiber), was prepared by the sugar batter method in accordance with Table 12. The prepared dough was formed in a stick-like shape and baked in an oven; thus, cookie containing wheat bran according to Example 6 and Comparative Example 6 was obtained. Table 13 shows the amount of MTG (mass%) in the dough for cookie containing wheat bran according to Example 6 and Comparative Example 6.

### <Evaluation on cookie containing wheat bran>

In regard to the cookie containing wheat bran according to Example 6 and Comparative Example 6, the external appearance and the taste thereof one day after the baking were evaluated, and the results are shown in Table 13.

**[Table 12]**

| Table 12: Components of cookie containing wheat bran, unit: mass% | |
|---|---|
| Whole wheat flour | 39.8 |
| Sugar | 21.9 |
| Whole egg | 12.0 |
| Salt | 0.4 |
| Oil and fat composition | 25.9 |
| | 100 |

**[Table 13]**

| Table 13: Amount of MTG in dough for cookie containing wheat bran, and evaluation on cookie containing wheat bran | | |
|---|---|---|
| | Example 6 | Comparative Example 6 |
| Amount of MTG (mass%) | 15.6 | 0.3 |
| External appearance | Cracks are observed but they are small and only a few. | A plurality of cracks is observed. |
| Taste | A little dry, which is unique to wheat bran. | Very dry, which is the characteristic of wheat bran, and it makes people choke. |
| | But it leaves sweet aftertaste, and is moist. | |

## Claims

1. Bakery dough comprising:
10 to 60 mass% of cereal flour containing 4 mass% or more of dietary fiber; and
1 to 35 mass% of medium-chain fatty acid containing triacylglycerol (MTG),
wherein n-decanoic acid in the medium-chain fatty acid in the MTG is 60 to 100 mass%.

2. The bakery dough according to claim 1, wherein the cereal flour is one or more kinds of cereal flour selected from whole wheat flour, wheat germ, rye, soybean flour, corn flour, wheat bran, rice bran, and flour obtained by processing any of these.

3. Bakery products obtained by heating and baking the bakery dough according to any one of claims 1 to 2.

4. A method of manufacturing bakery products, comprising:
preparing bakery dough including 10 to 60 mass% of cereal flour containing 4 mass% or more of dietary fiber and including 1 to 35 mass% of medium-chain fatty acid containing triacylglycerol (MTG), wherein n-decanoic acid in the medium-chain fatty acid in the MTG is 60 to 100 mass%, by using an oil and fat composition containing medium-chain fatty acid containing triacylglycerol (MTG); and
heating and baking the dough.

## Patentansprüche

1. Backteig, umfassend:
10 bis 60 Masse-% Getreidemehl, das 4 Masse-% oder mehr Ballaststoffe enthält; und
1 bis 35 Masse-% mittelkettige Fettsäure, die Triacylglycerin (MTG) enthält,
wobei n-Decansäure in der mittelkettigen Fettsäure in dem MTG 60 bis 100 Masse-% ausmacht.

2. Backteig nach Anspruch 1, wobei das Getreidemehl eine oder mehrere Arten von Getreidemehl ist, ausgewählt aus Weizenvollkornmehl, Weizenkeimen, Roggen, Sojabohnenmehl, Maismehl, Weizenkleie, Reiskleie und Mehl, erhalten durch Verarbeitung von einem beliebigen davon.

3. Backwaren, erhalten durch Erhitzen und Backen des Backteiges nach einem der Ansprüche 1 bis 2.

4. Verfahren zur Herstellung von Backwaren, umfassend:
Herstellen von Backteig, der 10 bis 60 Masse-% Getreidemehl, das 4 Masse-% oder mehr Ballaststoffe und einschließlich 1 bis 35 Masse-% mittelkettige Fettsäure, die Triacylglycerin (MTG) enthält, enthält, wobei n-Decansäure in der mittelkettigen Fettsäure in dem MTG 60 bis 100 Masse-% ausmacht, indem eine Öl- und Fettzusammensetzung verwendet wird, die mittelkettige Fettsäure enthält, die Triacylglycerin (MTG) enthält; und
Erhitzen und Backen des Teigs.

## Revendications

1. Pâte de boulangerie comprenant :
10 à 60 % en masse de farine de céréale contenant au moins 4 % en masse de fibres alimentaires ;
et
1 à 35 % en masse de triacylglycérol (MTG) contenant un acide gras à chaîne moyenne,
l'acide n-décanoïque dans l'acide gras à chaîne moyenne contenu dans le MTG représentant de 60 à 100 % en masse.

2. Pâte de boulangerie selon la revendication 1, dans laquelle la farine de céréale est une ou plusieurs sortes de farine de céréale sélectionnées parmi la farine de blé complet, le germe de blé, le seigle, la farine de soja, la farine de maïs, le son de blé, le son de riz et la farine obtenue en traitant n'importe laquelle d'entre elles.

3. Produits de boulangerie obtenus par chauffage et cuisson de la pâte de boulangerie selon l'une quelconque des revendications 1 à 2.

4. Procédé de fabrication de produits de boulangerie, comprenant :
la préparation d'une pâte de boulangerie comprenant 10 à 60 % en masse de farine de céréale contenant au moins 4 % en masse de fibres alimentaires et comprenant 1 à 35 % en masse de triacylglycérol (MTG) contenant un acide gras à chaîne moyenne, l'acide n-décanoïque dans l'acide gras à chaîne moyenne contenu dans le MTG représentant de 60 à 100 % en masse, en utilisant une composition d'huile et de matière grasse contenant le triacylglycérol (MTG) contenant un acide gras à chaîne moyenne ; et
le chauffage et la cuisson de la pâte.
